# EUROPÄISCHE PATENTANMELDUNG

(11) **EP 2 638 941 A1**
(43) Veröffentlichungstag der Anmeldung: **18.09.2013**
(21) Anmeldenummer: 13000732.1
(22) Anmeldetag: 13.02.2013
(51) Int. Cl.: B01D 29/46, B01D 46/40, B01D 29/72

(54) **Kerzenförmiger Filter, umfassend mehrere übereinander angeordnete Lamellen**

(30) Priorität: 12.03.2012 DE 202012002449 U
(71) Anmelder: Seebach, Ingo, 34131 Kassel (DE)
(72) Erfinder: Seebach, Ingo, 34131 Kassel (DE)
(74) Vertreter: Walther, Walther & Hinz GbR

(57) **Zusammenfassung**

Gegenstand der Erfindung ist ein kerzenförmiger Filter (1), umfassend mehrere übereinander angeordnete Lamellen (10), wobei die Lamellen (10) jeweils als gesonderte Bauteile eine zentrische Ausnehmung (16) aufweisen, wobei zwischen den Lamellen (10) unter Bildung einer Filterfeinheit (15) eine Linie oder eine Fläche mit einem bestimmbaren, minimalen Abstand vorgesehen ist, wobei die Lamellen (10) einen äußeren Randbereich (X) aufweisen, wobei die Lamellen (10) im äußeren Randbereich einen Abstand zueinander aufweisen, der größer ist als der im Bereich der Filterfeinheit (15), wobei die Lamellen (10) im äußeren Randbereich unter dem Einfluss einer von der zentrischen Ausnehmung (16) nach außen gerichteten Strömung vibrationsfähig (schwingfähig) ausgebildet sind.

## Beschreibung

Die Erfindung betrifft einen kerzenförmigen Filter mit mehreren übereinander angeordneten Lamellen.

Kerzenförmige Filter (Filterkerzen) sind in den unterschiedlichsten Ausführungsformen bekannt. Bekannt sind hierbei insbesondere solche kerzenförmigen Filter, die nach Art eines Filterkorbes ausgebildet sind, also auf dem Umfang eine zylindrische Filterschicht aufweisen, beispielsweise einen Gewebefilter, der auf einem Gerippe aufliegt, wobei das Gerippe verhindert, dass unter Druck die Filterschicht möglicherweise zusammenfällt. An zumindest einem Ende weist der Filter hierbei einen Auslass auf. Die Qualität der Filterwirkung ist hierbei im Wesentlichen abhängig von dem beispielsweise Filtergewebe. Anstelle von Geweben können auch Vliese eingesetzt werden, insbesondere Metall- oder auch Kunststoffvliese. Zur Reinigung eines solchen Filters wird üblicherweise derart vorgegangen, dass ein solcher Filter rückgespült wird. Das heißt, dass der Filter von innen nach außen entweder mit einer Flüssigkeit oder mit einem Gas durchströmt wird, was dafür sorgt, dass das auf dem Umfang des Filters anhaftende Filtergut abgestoßen wird. Häufig erfolgt die Rückspülung auch durch einen Gasstoß, um z. B. das Filtergewebe in Bewegung zu versetzen, mit dem Ziel anhaftenden Schmutz abzuschütteln.

Die Filterkapazität bei derartigen Filtern ist relativ begrenzt, da die Oberfläche, die als Filter zur Verfügung steht, der Mantelfläche des Filters entspricht. Insofern sind auch bereits Filter bekannt, die ein Filtermedium aufweisen, das plissiert ausgebildet ist. Hierdurch erhöht sich bei minimaler radialer Erstreckung die zur Verfügung stehende freie Filterfläche signifikant. Bekannt ist allerdings auch, dass sowohl die Filter mit glatter Filteroberfläche als auch die Filter mit einer plissiert ausgebildeten Filterfläche immer noch eine relativ geringe Filterfläche zur Verfügung stellen. Unabhängig hiervon sind plissierte Filterelemente meistens nicht rückspülbar.

Insofern liegt der Erfindung die Aufgabe zugrunde, einen Filter der eingangs genannten Art bereitzustellen, der sowohl über eine hohe Filterkapazität verfügt als auch leicht zu reinigen ist.

Zur Lösung der Aufgabe wird bei einem kerzenförmigen Filter mit mehreren übereinander angeordneten Lamellen vorgeschlagen, dass die Lamellen jeweils als gesonderte Bauteile eine zentrische Ausnehmung aufweisen, wobei zwischen den Lamellen unter Bildung einer Filterfeinheit eine Linie oder Fläche mit einem bestimmbaren minimalen Abstand vorgesehen ist, wobei die Lamellen einen äußeren Randbereich aufweisen, wobei die Lamellen im äußeren Randbereich einen Abstand zueinander aufweisen, der größer ist als im Bereich der Filterfeinheit, wobei die Lamellen im äußeren Randbereich unter dem Einfluss einer von der zentrischen Ausnehmung nach außen gerichteten Strömung vibrationsfähig ausgebildet sind. Das heißt, Gegenstand der Erfindung ist die Anordnung mehrerer übereinander angeordneter Lamellen, die zusammen ein Lamellenpaket bilden, wobei im äußeren Randbereich, d. h. im Bereich der äußeren Mantelfläche, die Lamellen zueinander beabstandet sind, wobei der Abstand zwischen den Lamellen zur Bildung einer Filterfeinheit die Lamellen eine Fläche oder eine Linie minimalen Abstandes zeigen. Hieraus folgt, dass sich zwischen den Lamellen im äußeren Randbereich eine im Querschnitt etwa dreieckförmige, umlaufende Ausnehmung ergibt, die ebenfalls als Filterfläche vollumfänglich zur Verfügung steht. Das heißt, in diesem Zwischenraum setzen sich Schmutzpartikel ab. Hierbei werden sich die größeren Schmutzpartikel außen im äußeren Randbereich und die kleineren Schmutzpartikel im Inneren des äußeren Randbereiches festsetzen. Hierbei kann es durchaus sein, dass die einzelnen Schmutzpartikel zwischen den Lamellen eingeklemmt sind. Um nun auch solche eingeklemmten Schmutzpartikel lösen zu können, ist vorgesehen, die Lamellen im äußeren Randbereich derart auszubilden, dass die unter dem Einfluss einer von der zentrischen Ausnehmung nach außen gerichteten Strömung beginnen zu vibrieren. Während der Vibration der einzelnen Lamellen im äußeren Randbereich, die nicht gleichgerichtet zu der der benachbarten Lamellen ist, können sich diese Schmutzpartikel lösen und werden durch die von innen nach außen gerichtete Strömung aus den Ausnehmungen herausgetragen. Mithin steht ein Filter zur Verfügung, der über eine verhältnismäßig große Filterfläche, und darüber hinaus über äußerst wirksame Reinigungseigenschaften bei Rückspülung eines solchen Filters verfügt.

Vorteilhafte Merkmale und Ausgestaltungen zu der Erfindung ergeben sich aus den Unteransprüchen.

So ist nach einem weiteren Merkmal der Erfindung insbesondere vorgesehen, dass die Lamellen, die ringförmig ausgebildet sind, im äußeren Randbereich ein Querschnittsprofil aufweisen, das wechselweise zu einem Strömungsabriss ober- und unterhalb des Profiles führt. Durch einen solchen Strömungsabriss wechselseitig auf der Ober- und Unterseite des Profiles kommt es zu einem Flattern des Profiles, was schlussendlich durch die Veränderung des Abstands zu dem jeweils benachbarten Profil zu einem Lösen der Verschmutzungen im Bereich der dreieckförmigen Ausnehmungen im äußeren Randbereich führt. In diesem Zusammenhang hat sich herausgestellt, dass dann, wenn das Profil nach Art eines Tragflügels ausgebildet ist, eine besonders gute Reinigungswirkung erzielt werden kann, da bei entsprechendem Anstellwinkel zur Strömungsrichtung es zu einem signifikanten Flattern der Lamellen im äußeren Randbereich kommt.

Um die Filterfeinheit zu bestimmen, weisen die Lamellen Abstandshalter auf. Die Abstandshalter weisen hierbei eine Stärke überstehend über dem eigentlichen Lamellenkörper auf, die die Filterfeinheit bestimmt, wobei mit der Filterfeinheit die Durchlässigkeit des Filters für Schmutzpartikel definiert ist. In diesem Zusammenhang ist insbesondere vorgesehen, mehrere Abstandshalter verteilt über den Umfang der Ober- und/oder Unterseite auf einer Lamelle anzuordnen. Des Weiteren erstrecken sich nach einem besonderen Merkmal der Erfindung die Abstandshalter im Wesentlichen über die Breite der Lamelle. Das heißt, dass die Abstandshalter sich auch über den äußeren Randbereich der Lamelle erstrecken, der, wie bereits oben erwähnt, nach Art eines Tragflügels ausgebildet sein kann. Durch diese Abstandshalter wird insofern auch die Lamelle in diesem Bereich stabilisiert. Insbesondere wird hierdurch verhindert, dass die Filtereinheit unter Einwirkung von radialem Druck zusammenfällt, d. h. die äußeren Randbereiche der Lamellen einknicken.

Des Weiteren ist vorgesehen, dass die Abstandshalter in etwa der Querschnittsform der Lamelle folgen; hierdurch wird erreicht, dass die Bewegung der Lamelle nur in geringem Umfang eingeschränkt, aber dennoch die Stabilität der Lamelle im äußeren Randbereich beibehalten wird.

Des Weiteren ist vorgesehen, dass der Abstand zweier Lamellen im äußeren Randbereich von innen nach außen zunimmt, sodass sich eine etwa dreieckförmige Gestaltung der Ausnehmung im Querschnitt ergibt.

Mehrere Lamellen werden zu einem Lamellenpaket verbunden, wobei die Größe des Lamellenpaketes, d. h. die Anzahl der übereinander angeordneten Lamellen und die Größe der Lamellen, abhängig ist vom Einsatzzweck, d. h. von der angestrebten Filterwirkung. Zur Erstellung eines Lamellenpaketes ist im Einzelnen vorgesehen, mehrere Bohrungen umfangsverteilt in den Lamellen vorzunehmen, um durch die Bohrungen die Lamellen auf Stangen aufzuziehen, um eben ein solches Lamellenpaket bereitzustellen.

Anhand der Zeichnungen wird die Erfindung nachstehend beispielhaft näher erläutert.
- Fig. 1: zeigt einen kerzenförmigen Filter mit einer Mehrzahl von übereinander angeordneten Lamellen;
- Fig. 2: zeigt eine einzelne Lamelle in einer Draufsicht;
- Fig. 3: zeigt einen Schnitt gemäß der Linie III-III aus Fig. 2;
- Fig. 3a: zeigt die Übereinanderanordnung mehrerer Lamellen im Bereich des Schnittes gemäß Fig. 3;
- Fig. 4: zeigt einen Schnitt gemäß der Linie IV-IV aus Fig. 2;
- Fig. 5: zeigt einen Schnitt gemäß der Linie V-V aus Fig. 2.

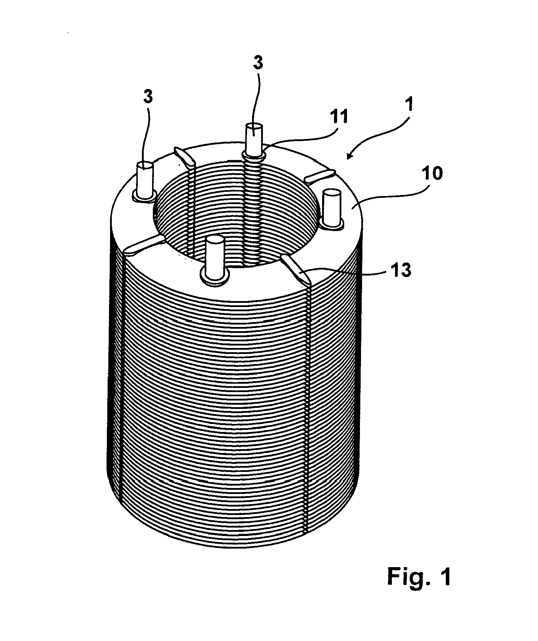

Wie sich aus Fig. 1 ergibt, setzt sich der kerzenförmige Filter 1 aus einer Vielzahl übereinander angeordneter identischer Lamellen 10 zusammen. Die einzelnen Lamellen 10 gleicher Bauart weisen über den Umfang verteilt mehrere Bohrungen 11 zur Aufnahme von Stangen 3 auf. Durch die Stangen 3, die als Gewindestangen ausgebildet sein können, werden insofern einzelne Lamellen aufgenommen, wodurch schlussendlich der Filter 1 gebildet wird.

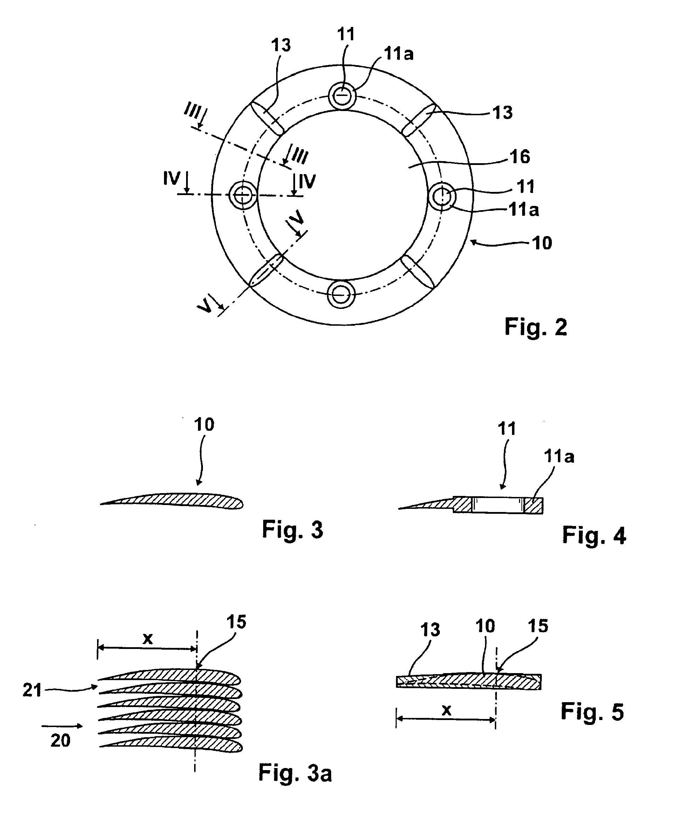

Aus Fig. 2 ergibt sich die Ausbildung einer Lamelle in einer Draufsicht. Wiederum erkennbar sind die vier über den Umfang verteilt angeordneten Bohrungen 11, wobei zwischen den einzelnen Bohrungen 11 Abstandshalter 13 vorgesehen sind. Die Abstandshalter 13 sind ebenfalls in einer Mehrzahl umfangsverteilt auf der Oberfläche der Lamelle 10 angeordnet, wie sich dies unmittelbar in Anschauung von Fig. 2 ergibt. Die Querschnittsform der Lamelle 10 ergibt sich aus der Fig. 3. Erkennbar ist, dass die Querschnittsform einem Tragflächenprofil nachempfunden ist. Aus Fig. 3 a ergibt sich eine Darstellung mehrerer übereinander angeordneter Lamellen 10 gemäß Fig. 3. Die sogenannte Filterfeinheit, das heißt die Linie oder Fläche, die den geringsten freien Querschnitt zwischen zwei Lamellen 10 darstellt, ist mit 15 bezeichnet. Gebildet wird die Filterfeinheit dadurch, dass umfangsverteilt die mehreren Abstandshalter 13 vorgesehen sind, wie dies bereits geschildert wurde, wobei die Abstandshalter 13, wie sich dies beispielsweise in Anschauung von Fig. 5 ergibt, leicht über die Oberseite bzw. gegebenenfalls auch über die Unterseite einer Lamelle 10 überstehen. Erkennbar ist aus Fig. 2, dass sich die Abstandshalter 13 über die komplette Breite einer Lamelle erstrecken. Nun ist es allerdings so, dass die Lamelle 10, da sie nach Art eines Tragflächenprofils ausgebildet ist, über ihre Breite einen unterschiedlichen Querschnitt aufweist. Das heißt, von der zentrischen Ausnehmung 16 ausgehend vermindert sich der Querschnitt der Lamelle bis zum Ende des äußeren Randes. Der äußere Randbereich ist gekennzeichnet als der Abschnitt im Querschnitt der Lamelle, der sich von der Filterfeinheit 15 bis zum äußeren Rand erstreckt, und der in der Fig. 3 a mit "X" bezeichnet ist. In Strömungsrichtung gesehen (Pfeil 20) vermindert sich insofern der freie Querschnitt zwischen zwei Lamellen, der durch den Pfeil 21 gekennzeichnet ist.

Die Filterfeinheit 15 wird beeinflusst durch die Höhe des Abstandshalters 13, das heißt, um wie viel der Abstandshalter 13 über die Oberfläche der Lamelle 10 übersteht. Zur Verdeutlichung des Überstandes des Abstandshalters über die eigentliche Oberfläche der Lamelle dient auch die Darstellung gemäß Fig. 5. Dies insofern, als dort die eigentliche Querschnittsform der Lamelle gestrichelt eingezeichnet ist. Erkennbar ist aus Fig. 5 im äußeren Randbereich "X" der Abstandshalter 13, der der Form der Lamelle nachgeführt ist, aber dennoch in diesem Bereich dicker ist, als die Querschnittsform der Lamelle. Insofern sorgt der Abstandshalter im äußeren Randbereich für eine Versteifung der Lamelle. Dies vor dem Hintergrund, dass bei hohen Drücken in Richtung von außen auf den Filter hierdurch verhindert wird, dass die Lamellen zusammenfallen. Unter einem Zusammenfallen der Lamellen wäre zu verstehen, dass die Enden der Lamellen beispielsweise nach unten abknicken würden, und insofern es zu überhaupt keiner Filterwirkung beim Durchströmen eines Mediums kommen würde.

Auch im Bereich der Bohrung 11 ist vorgesehen, dass der die Bohrung 11 umgebende Kranz 11a der Höhe der Lamelle beim Abstandshalter 13 entspricht. Insofern ergibt sich über den Umfang der Lamelle bei Aufeinanderliegen mehrerer Lamellen überall die gleiche Filterfeinheit.

### Bezugszeichenliste

- 1: Filter
- 3: Stangen
- 10: Lamelle
- 11: Bohrung
- 13: Abstandshalter
- 15: Filterfeinheit
- 16: zentrische Ausnehmung
- 20: Strömungsrichtung
- 21: freier Querschnitt zwischen zwei Lamellen

## Patentansprüche

1. Kerzenförmiger Filter (1), umfassend mehrere übereinander angeordnete Lamellen (10), wobei die Lamellen (10) jeweils als gesonderte Bauteile eine zentrische Ausnehmung (16) aufweisen, wobei zwischen den Lamellen (10) unter Bildung einer Filterfeinheit (15) eine Linie oder eine Fläche mit einem bestimmbaren, minimalen Abstand vorgesehen ist, wobei die Lamellen (10) einen äußeren Randbereich (X) aufweisen, wobei die Lamellen (10) im äußeren Randbereich einen Abstand zueinander aufweisen, der größer ist als der im Bereich der Filterfeinheit (15), wobei die Lamellen (10) im äußeren Randbereich unter dem Einfluss einer von der zentrischen Ausnehmung (16) nach außen gerichteten Strömung vibrationsfähig (schwingfähig) ausgebildet sind.

2. Kerzenförmiger Filter (1) nach Anspruch 1,
**dadurch gekennzeichnet,**
**dass** die Lamellen (10) im äußeren Randbereich (X) ein Querschnittsprofil aufweisen, das wechselweise zu einem Strömungsabriss ober- und unterhalb des Profils der Lamelle (10) führt.

3. Kerzenförmiger Filter (1) nach Anspruch 2,
**dadurch gekennzeichnet,**
**dass** das Profil nach Art eines Tragflügels ausgebildet ist.

4. Kerzenförmiger Filter (1) nach einem der voranstehenden Ansprüche,
**dadurch gekennzeichnet,**
**dass** die Lamellen (10) zur Bestimmung der Filterfeinheit (15) Abstandshalter (13) aufweisen.

5. Kerzenförmiger Filter (1) nach Anspruch 4,
**dadurch gekennzeichnet,**
**dass** mehrere Abstandshalter (13) verteilt über den Umfang auf der Ober- und/oder Unterseite einer Lamelle (10) angeordnet sind.

6. Kerzenförmiger Filter (1) nach Anspruch 4 oder 5,
**dadurch gekennzeichnet,**
**dass** sich die Abstandshalter (13) im Wesentlichen über die Breite der Lamelle (10) erstrecken.

7. Kerzenförmiger Filter (1) nach einem der Ansprüche 4 bis 6,
**dadurch gekennzeichnet,**
**dass** die Abstandshalter (13) in etwa der Querschnittsform der Lamelle (10) folgen.

8. Kerzenförmiger Filter (1) nach einem der voranstehenden Ansprüche,
**dadurch gekennzeichnet,**
**dass** der Abstand zweier Lamellen (10) im äußeren Randbereich von innen nach außen zunimmt.

9. Kerzenförmiger Filter (1) nach einem der voranstehenden Ansprüche,
**dadurch gekennzeichnet,**
**dass** mehrere Lamellen (10) zu einem Lamellenpaket verbunden sind.

10. Kerzenförmiger Filter (1) nach Anspruch 9,
**dadurch gekennzeichnet,**
**dass** die Lamellen (10) umfangsverteilt mehrere Bohrungen (11) zur Aufnahme von Stangen (3) zur Bildung des Lamellenpakets aufweisen.
